(19) Europäisches Patentamt / European Patent Office / Office européen des brevets

(11) **EP 3 689 585 B1**

(12) **EUROPEAN PATENT SPECIFICATION**

(45) Date of publication and mention
of the grant of the patent:
**09.02.2022 Bulletin 2022/06**

(21) Application number: **18860869.9**

(22) Date of filing: **27.09.2018**

(51) International Patent Classification (IPC):
*B29C 64/40* (2017.01)    *B29C 64/118* (2017.01)
*B33Y 10/00* (2015.01)    *B33Y 70/00* (2020.01)
*C08F 212/08* (2006.01)    *C08F 220/18* (2006.01)
*C08F 220/44* (2006.01)    *C08F 222/40* (2006.01)
*C08F 220/14* (2006.01)

(52) Cooperative Patent Classification (CPC):
(C-Sets available)
**C08F 220/14; B29C 64/118; B29C 64/40;
B33Y 10/00; B33Y 70/00; C08F 212/08;
C08F 220/1811; C08F 220/44; C08F 222/40;**
C08F 212/30      (Cont.)

(86) International application number:
**PCT/JP2018/035900**

(87) International publication number:
**WO 2019/065824 (04.04.2019 Gazette 2019/14)**

(54) **SOLUBLE MATERIAL FOR THREE-DIMENSIONAL MODELING**

LÖSLICHES MATERIAL ZUR DREIDIMENSIONALEN MODELLIERUNG

MATÉRIAU SOLUBLE POUR LA MODÉLISATION TRIDIMENSIONNELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2017 JP 2017187465
25.09.2018 JP 2018178542**

(43) Date of publication of application:
**05.08.2020 Bulletin 2020/32**

(73) Proprietor: **Kao Corporation
Chuo-Ku
Tokyo 103-8210 (JP)**

(72) Inventor: **YOSHIMURA,Tadanori
Wakayama-shi
Wakayama 640-8580 (JP)**

(74) Representative: **Hoffmann Eitle
Patent- und Rechtsanwälte PartmbB
Arabellastraße 30
81925 München (DE)**

(56) References cited:
**WO-A1-2016/059986    WO-A1-2016/125860
JP-A- 2014 511 933    JP-A- 2016 215 109
US-A1- 2017 232 684    US-A1- 2017 240 675**

**(Cont. next page)**

(52) Cooperative Patent Classification (CPC): (Cont.)

C-Sets
**C08F 212/08, C08F 212/30;**
**C08F 220/14, C08F 212/30;**
**C08F 220/1811, C08F 212/30;**
**C08F 220/44, C08F 212/30;**
**C08F 222/40, C08F 212/08, C08F 212/30;**
**C08F 222/40, C08F 212/30;**
**C08F 222/40, C08F 220/14, C08F 212/30**

**Description**

TECHNICAL FIELD

The present invention relates to a soluble material for three-dimensional modeling that is used as a material of a support material for supporting a three-dimensional object when the three-dimensional object is manufactured by a 3D printer, particularly a 3D printer of a fused deposition modeling system.

BACKGROUND ART

The 3D printer is one type of rapid prototyping, and is a three-dimensional printer for modeling a three-dimensional object based on 3D data such as 3D CAD and 3D CG. Systems of the 3D printer have been known, such as a fused deposition modeling system (hereinafter, also referred to as an FDM system), an inkjet ultraviolet curing system, a stereolithography system, and a selective laser sintering system. Among these systems, the FDM system is a modeling system of heat-melting, extruding, and laminating polymer filaments to obtain a three-dimensional object, and the FDM system does not use a reaction of a material unlike the other systems. Therefore, a 3D printer of the FDM system is small and inexpensive, and has become popular in recent years as an apparatus with less post-processing. In order to model a three-dimensional object having a more complex form with the FDM system, a modeling material constituting the three-dimensional object and a support material for supporting a three-dimensional structure of the modeling material are laminated to obtain a precursor of the three-dimensional object, and then the support material can be removed from the precursor of the three-dimensional object to obtain the target three-dimensional object.

An example of the method of removing the support material from the precursor of the three-dimensional object is a method of using a methacrylic acid copolymer as the support material and soaking the precursor of the three-dimensional object in a high temperature strong alkaline aqueous solution to remove the support material (for example, JP-T-2012-509777). The method utilizes a phenomenon that carboxylic acid in the methacrylic acid copolymer is neutralized by an alkali and dissolved in the strong alkaline aqueous solution.

In the case of using, as the support material, the methacrylic acid copolymer disclosed in JP-T-2012-509777, a strong alkaline aqueous solution needs to be used to remove the support material from the precursor of the three-dimensional object. However, this strong alkaline aqueous solution is large in danger for people and in load onto the environment. Moreover, when the precursor of the three-dimensional object is soaked in the strong alkaline aqueous solution for a long period, the three-dimensional object in the precursor of the three-dimensional object tends to be eroded by the alkali. Thus, restrictions have been given to the use of a polyester resin, such as polylactic acid (PLA), which is low in resistance against alkalines, as a material of the three-dimensional object. Therefore, support materials have been required which are removable not by a strong alkaline aqueous solution but by neutral water having a pH of 6 to 8.

JP-T-2002-516346 discloses a method of using, as the support material, poly(2-ethyl-2-oxazoline) soluble in water and soaking a precursor of a three-dimensional object in water to remove the support material. According to the method described in JP-T-2002-516346, the support material in the precursor of the three-dimensional object is removable without using a strong alkaline aqueous solution. However, poly(2-ethyl-2-oxazoline) contained in the soluble material for three-dimensional modeling is high in affinity with moisture, so that the soluble material for three-dimensional modeling, which contains poly(2-ethyl-2-oxazoline), absorbs moisture in the air when exposed to a high humidity. When the soluble material for three-dimensional modeling that contains poly(2-ethyl-2-oxazoline) and the like containing moisture is heated, melted, printed out and laminated by the 3D printer of the FDM system, there have been cases in which the moisture is vaporized and scattered by high temperature, so that the soluble material for three-dimensional modeling is foamed to remarkably damage the modeling accuracy of the three-dimensional object.

In order to solve the above-mentioned problems, JP-A-2017-030346 discloses a soluble material for three-dimensional modeling that contains a specific water-soluble polyester resin. The soluble material for three-dimensional modeling according to JP-A-2017-030346 is capable of providing a support material that is suitable for manufacturing of a three-dimensional object with the FDM system and that has moisture absorption resistance while being large in dissolution speed into neutral water and removable quickly from a precursor of a three-dimensional object without using a strong alkaline aqueous solution. US 2017/240675 A1 and US 2017/232684 A1 disclose soluble material used for support material used in manufacture of three-dimensional component, which comprise copolymers containing specified amount of hydrophilic monomer units derived from unsaturated acids, such as (meth)acrylic acid or itaconic acid, and hydrophobic monomer units.

SUMMARY OF THE INVENTION

A soluble material for three-dimensional modeling according to the present invention is a soluble material for three-dimensional modeling that is used as a material of a support material for supporting a three-dimensional object when the three-dimensional object is manufactured by a 3D printer of an FDM system, in which the soluble material for three-dimensional modeling contains a copolymer $\alpha$ having a vinyl monomer unit A that has a hydrophilic group, and having a vinyl monomer unit B that has a group interacting with the hydrophilic group and is other than the vinyl monomer unit A, the vinyl monomer unit A in the copolymer $\alpha$ has a content of the hydrophilic group of 0.3 to 3.0 mmol/g and the hydrophilic group is a sulfonate group.

A method for manufacturing a three-dimensional object according to the present invention is a method for manufacturing a three-dimensional object with an FDM system, the method including: a step of obtaining a precursor of a three-dimensional object that contains the three-dimensional object and a support material; and a support material removing step of bringing the precursor of the three-dimensional object into contact with neutral water to remove the support material, in which a material of the support material is the soluble material for three-dimensional modeling.

A support material according to the present invention is a support material for supporting a three-dimensional object when the three-dimensional object is manufactured by a 3D printer of an FDM system, in which the support material contains a copolymer $\alpha$ having a vinyl monomer unit A that has a hydrophilic group, and having a vinyl monomer unit B that has a group interacting with the hydrophilic group and is other than the vinyl monomer unit A, the vinyl monomer unit A in the copolymer $\alpha$ has a content of the hydrophilic group of 0.3 to 3.0 mmol/g and the hydrophilic group is a sulfonate group.

MODE FOR CARRYING OUT THE INVENTION

When a modeling material and a support material are laminated by the 3D printer of the FDM system, a remarkably large difference in discharge temperature between the modeling material and the support material causes thermal contraction to lower the modeling accuracy of a three-dimensional object. Therefore, from a viewpoint of improving the modeling accuracy of the three-dimensional object, the discharge temperatures of the modeling material and the support material are preferably close to some extent. Therefore, when the modeling material is a high heat resistance material such as an engineering plastic or a super engineering plastic, a conventional soluble material for three-dimensional modeling that is removable by neutral water has sometimes had trouble in giving high modeling accuracy from a viewpoint of the heat resistance.

When the super engineering plastic is used as the modeling material, a higher heat resistance support material is, due to the above-mentioned reason, required to attain high modeling accuracy. Such a support material, however, is often insoluble or hardly soluble in an aqueous solution, and the removal of such a support material has for now relied on physical removal by hand, or a break-away system. The break-away system is very troublesome, and further provides a problem of limiting the form of the three-dimensional object to a form easily allowing the physical removal of the support material, to decrease the degree of freedom in modeling.

The present invention provides a soluble material for three-dimensional modeling that is used for a support material and that has high heat resistance and moisture absorption resistance while being large in dissolution speed into neutral water and removable quickly from a precursor of a three-dimensional object without using a strong alkaline aqueous solution.

The present invention provides a method for manufacturing a three-dimensional object. The method restrains a support material from being foamed and is thus capable of restraining a three-dimensional object from being lowered in modeling accuracy, even when the support material is exposed to a high humidity and then used for manufacturing of the three-dimensional object with an FDM system of using, as a modeling material, a high heat resistance material such as an engineering plastic or a super engineering plastic, and that is capable of removing the support material quickly from a precursor of the three-dimensional object without using a strong alkaline aqueous solution.

The present invention provides a support material that is restrained from being foamed and is thus capable of restraining a three-dimensional object from being lowered in modeling accuracy, even when the support material is exposed to a high humidity and then used for manufacturing of the three-dimensional object with an FDM system of using, as a modeling material, a high heat resistance material such as an engineering plastic or a super engineering plastic, and that is removable quickly from a precursor of the three-dimensional object without using a strong alkaline aqueous solution.

A soluble material for three-dimensional modeling according to the present invention is a soluble material for three-dimensional modeling that is used as a material of a support material for supporting a three-dimensional object when the three-dimensional object is manufactured by a 3D printer of an FDM system, in which the soluble material for three-dimensional modeling contains a copolymer $\alpha$ having a vinyl monomer unit A that has a hydrophilic group, and having a vinyl monomer unit B that has a group interacting with the hydrophilic group and is other than the vinyl monomer unit A, the vinyl monomer unit A in the copolymer $\alpha$ has a content of the hydrophilic group of 0.3 to 3.0 mmol/g and the hydrophilic group is a sulfonate group.

A method for manufacturing a three-dimensional object according to the present invention is a method for manufacturing a three-dimensional object with an FDM system, the method including: a step of obtaining a precursor of a three-dimensional object that contains the three-dimensional object and a support material; and a support material removing step of bringing the precursor of the three-dimensional object into contact with neutral water to remove the support material, in which a material of the support material is the soluble material for three-dimensional modeling.

A support material according to the present invention is a support material for supporting a three-dimensional object when the three-dimensional object is manufactured by a 3D printer of an FDM system, in which the support material contains a copolymer $\alpha$ having a vinyl monomer unit A that has a hydrophilic group, and having a vinyl monomer unit B that has a group interacting with the hydrophilic group and is other than the vinyl monomer unit A, the vinyl monomer unit A in the copolymer $\alpha$ has a content of the hydrophilic group of 0.3 to 3.0 mmol/g and the hydrophilic group is a sulfonate group.

According to the present invention, it is possible to provide a soluble material for three-dimensional modeling that is used for a support material and that has high heat resistance and moisture absorption resistance while being large in dissolution speed into neutral water and removable quickly from a precursor of a three-dimensional object without using a strong alkaline aqueous solution.

According to the present invention, it is possible to provide a method for manufacturing a three-dimensional object. The method restrains a support material from being foamed and is thus capable of restraining a three-dimensional object from being lowered in modeling accuracy, even when the support material is exposed to a high humidity and then used for manufacturing of the three-dimensional object with an FDM system of using, as a modeling material, a high heat resistance material such as an engineering plastic or a super engineering plastic, and that is capable of removing the support material quickly from a precursor of the three-dimensional object without using a strong alkaline aqueous solution.

According to the present invention, it is possible to provide a support material that is restrained from being foamed and is thus capable of restraining a three-dimensional object from being lowered in modeling accuracy, even when the support material is exposed to a high humidity and then used for manufacturing of the three-dimensional object with an FDM system of using, as a modeling material, a high heat resistance material such as an engineering plastic or a super engineering plastic, and that is removable quickly from a precursor of the three-dimensional object without using a strong alkaline aqueous solution.

Hereinafter, one embodiment of the present invention is described.

<Soluble material for three-dimensional modeling>

A soluble material for three-dimensional modeling according to the present embodiment is a soluble material for three-dimensional modeling that is used as a material of a support material for supporting a three-dimensional object when the three-dimensional object is manufactured by a 3D printer of an FDM system, in which the soluble material for three-dimensional modeling contains a copolymer $\alpha$ having a vinyl monomer unit A that has a hydrophilic group, and having a vinyl monomer unit B that has a group interacting with the hydrophilic group and is other than the vinyl monomer unit A, the vinyl monomer unit A in the copolymer $\alpha$ has a content of the hydrophilic group of 0.3 to 3.0 mmol/g and the hydrophilic group is a sulfonate group.

A support material made of a material that is the soluble material for three-dimensional modeling has high heat resistance and moisture absorption resistance while being large in dissolution speed into neutral water and removable quickly from a precursor of a three-dimensional object without using a strong alkaline aqueous solution. The reason why the soluble material for three-dimensional modeling exhibits such advantageous effects is unclear, but is presumably as follows.

The soluble material for three-dimensional modeling according to the present embodiment contains the copolymer $\alpha$ that has a specific amount of the vinyl monomer unit A having the hydrophilic group, to have low moisture absorption regardless of having high dissolubility to neutral water. The group contained in the vinyl monomer unit B interacts with the hydrophilic group to presumably restrain molecular motion and thus improve the heat resistance of the copolymer $\alpha$. The soluble material for three-dimensional modeling according to the present embodiment contains such a copolymer $\alpha$ to presumably have high heat resistance and moisture absorption resistance while being large in dissolution speed into neutral water and removable quickly from a precursor of a three-dimensional object without using a strong alkaline aqueous solution.

[Copolymer $\alpha$]

The copolymer $\alpha$ contains a vinyl monomer unit A that has a hydrophilic group, and contains a vinyl monomer unit B that has a group interacting with the hydrophilic group and is other than the vinyl monomer unit A.

[Vinyl monomer unit A]

The copolymer $\alpha$ contains a vinyl monomer unit A having a hydrophilic group. The vinyl monomer unit A is not particularly limited as long as the vinyl monomer unit A is a unit derived from a vinyl monomer having a hydrophilic group. In the present specification, the vinyl monomer for deriving the vinyl monomer unit A is also referred to as a vinyl monomer A. The vinyl monomer having a hydrophilic group refers to one that exhibits a property of having a solubility at 25°C in water of 2% by weight or more.

From a viewpoint of the dissolubility to neutral water and a viewpoint of the ease of a polymerization reaction when the copolymer $\alpha$ is produced, the hydrophilic group is a sulfonate group.

From the viewpoint of the dissolubility to neutral water and the viewpoint of the ease of a polymerization reaction when the copolymer $\alpha$ is produced, the sulfonate group is preferably a sulfonate group represented by $-SO_3M^3$ ($M^3$ represents a counterion of a sulfonic acid group constituting the sulfonate group; and from the viewpoint of the dissolubility to neutral water, $M^3$ is preferably at least one type selected from the group consisting of a sodium ion, a potassium ion, a lithium ion, a calcium ion, a magnesium ion, an ammonium ion, a barium ion, and a zinc ion, more preferably at least one type selected from the group consisting of a sodium ion, a potassium ion, a lithium ion, a magnesium ion, and an ammonium ion, further preferably at least one type selected from the group consisting of a sodium ion and a potassium ion, further more preferably a sodium ion).

From the viewpoint of the dissolubility to neutral water, a viewpoint of the moisture absorption resistance, the viewpoint of the heat resistance, and the viewpoint of the ease of a polymerization reaction when the copolymer $\alpha$ is produced, the vinyl monomer A is one having at least one sulfonate hydrophilic group , preferably one having a sulfonate group represented by $-SO_3M^3$ ($M^3$ represents a counterion of a sulfonic acid group constituting the sulfonate group; and from the viewpoint of the dissolubility to neutral water, $M^3$ is preferably at least one type selected from the group consisting of a sodium ion, a potassium ion, a lithium ion, a calcium ion, a magnesium ion, an ammonium ion, a barium ion, and a zinc ion, more preferably at least one type selected from the group consisting of a sodium ion, a potassium ion, a lithium ion, a magnesium ion, and an ammonium ion, further preferably at least one type selected from the group consisting of a sodium ion and a potassium ion, further more preferably a sodium ion); and from the viewpoint of the dissolubility to neutral water, the viewpoint of the moisture absorption resistance, the viewpoint of the heat resistance, and the viewpoint of the ease of a polymerization reaction when the copolymer $\alpha$ is produced, the vinyl monomer A is preferably at least one type selected from the group consisting of styrene sulfonate, vinyl sulfonate, a sulfonate group-introduced (meth)acrylic acid alkyl ester, and sulfonate group-introduced (meth)acrylamide, more preferably styrene sulfonate.

From the viewpoint of the dissolubility to neutral water, the content of the vinyl monomer unit A in the copolymer $\alpha$ is 0.3 mmol/g or more, preferably 0.5 mmol/g or more, more preferably 0.6 mmol/g or more, further preferably 0.8 mmol/g or more, further more preferably 1.15 mmol/g or more; and from the viewpoint of the moisture absorption resistance and the viewpoint of the heat resistance, the content is 3.0 mmol/g or less, preferably 2.0 mmol/g or less, more preferably 1.5 mmol/g or less, further preferably 1.2 mmol/g or less. In the present specification, the copolymer composition is measured by the method described in EXAMPLES.

From the viewpoint of the dissolubility to neutral water, the vinyl monomer unit A in the copolymer $\alpha$ has a content of the hydrophilic group of preferably 0.3 mmol/g or more, more preferably 0.5 mmol/g or more, more preferably 0.8 mmol/g or more; and from the viewpoint of the moisture absorption resistance and the viewpoint of the heat resistance, the vinyl monomer unit A has a content of the hydrophilic group of preferably 3.0 mmol/g or less, more preferably 1.5 mmol/g or less, more preferably 1.2 mmol/g or less.

From the viewpoint of the dissolubility to neutral water, the content of the hydrophilic group in the copolymer $\alpha$ is preferably 0.3 mmol/g or more, more preferably 0.5 mmol/g or more, more preferably 0.8 mmol/g or more; and from the viewpoint of the moisture absorption resistance and the viewpoint of the heat resistance, the content is preferably 3.0 mmol/g or less, more preferably 1.5 mmol/g or less, more preferably 1.2 mmol/g or less.

From the viewpoint of the dissolubility to neutral water, the ratio of the amount of the vinyl monomer unit A to the total amount of monomer units in the copolymer $\alpha$ is preferably 3 mol% or more, more preferably 5 mol% or more, further preferably 6 mol% or more, further more preferably 7 mol% or more, further more preferably 11 mol% or more, further more preferably 13 mol% or more; and from the viewpoint of the moisture absorption resistance and the viewpoint of the heat resistance, the ratio is preferably 55 mol% or less, more preferably 44 mol% or less, further preferably 25 mol% or less, further more preferably 18 mol% or less, further more preferably 15 mol% or less, further more preferably 14 mol% or less.

[Vinyl monomer unit B]

The copolymer $\alpha$ contains a vinyl monomer unit B that has a group interacting with the hydrophilic group and that is other than the vinyl monomer unit A. The vinyl monomer unit B is not particularly limited as long as the vinyl monomer unit B is a unit that has a group interacting with the hydrophilic group and that is derived from a vinyl monomer other than the vinyl monomer A. In the present specification, the vinyl monomer for deriving the vinyl monomer unit B is also referred to as a vinyl monomer B.

Examples of the interaction include an ion-dipole interaction, a dipole-dipole interaction, a $\pi$-$\pi$ interaction, a $\pi$-cation interaction, a dipole-induced dipole interaction, an induced dipole-induced dipole interaction, and an interionic interaction.

The group interacting with the hydrophilic group can be changed according to the type of the hydrophilic group, and examples of the group include at least one type selected from the group consisting of a carbonyl group, an ether group, and an aromatic group. Among these groups, a carbonyl group is preferable from the viewpoint of the heat resistance. For example, when the hydrophilic group is a sulfonate group and the carbonyl group is the group interacting with the hydrophilic group, the carbonyl stretching peak of the carbonyl group in the copolymer $\alpha$ is preferably 1724 cm$^{-1}$ or less, more preferably 1722 cm$^{-1}$ or less from the viewpoint of the heat resistance.

The vinyl monomer B is not particularly limited, and examples of the vinyl monomer B include a (meth)acrylic acid alkyl ester, styrene, an N-substituted maleimide, and acrylonitrile. Among these monomers, a (meth)acrylic acid ester and/or an N-substituted maleimide is preferable from the viewpoint of the heat resistance and the viewpoint of the moisture absorption resistance. In the present specification, (meth)acrylic means acrylic and/or methacrylic.

Examples of the (meth)acrylic acid alkyl ester include methyl (meth)acrylate, ethyl (meth)acrylate, n-propyl (meth)acrylate, n-butyl (meth)acrylate, t-butyl (meth)acrylate, and isobornyl (meth)acrylate. Among these esters, methyl (meth)acrylate is preferable from the viewpoint of the heat resistance and the viewpoint of the moisture absorption resistance.

Examples of the N-substituted maleimide include N-methylmaleimide, N-ethylmaleimide, N-cyclohexylmaleimide, N-phenylmaleimide, N-benzylmaleimide, N-tert-butylmaleimide, and N-ethylmaleimide. Among these maleimides, N-phenylmaleimide is preferable from the viewpoint of the heat resistance and the viewpoint of the moisture absorption resistance.

From the viewpoint of the moisture absorption resistance and the viewpoint of the heat resistance, the content of the vinyl monomer unit B in the copolymer $\alpha$ is preferably 3.8 mmol/g or more, more preferably 6.9 mmol/g or more, further preferably 7.5 mmol/g or more; and from the viewpoint of the dissolubility to neutral water, the content is preferably 9.4 mmol/g or less, more preferably 8.8 mmol/g or less, further preferably 7.9 mmol/g or less.

From the viewpoint of the heat resistance, the content of the group interacting with the hydrophilic group in the copolymer $\alpha$ is preferably 0.3 mmol/g or more, more preferably 0.5 mmol/g or more, further preferably 0.7 mmol/g or more, further more preferably 3.8 mmol/g or more, further more preferably 6.9 mmol/g or more; and from the viewpoint of the dissolubility to neutral water, the content is preferably 9.4 mmol/g or less, more preferably 8.8 mmol/g or less, further preferably 7.9 mmol/g or less.

From the viewpoint of the dissolubility to neutral water, the mole ratio between the hydrophilic group and the group interacting with the hydrophilic group (the hydrophilic group/the group interacting with the hydrophilic group) is preferably 0.03 or more, more preferably 0.06 or more, further preferably 0.10 or more; and from the viewpoint of the heat resistance, the mole ratio is preferably 0.7 or less, more preferably 0.2 or less, further preferably 0.16 or less.

From the viewpoint of the heat resistance and the viewpoint of the moisture absorption resistance, the ratio of the amount of the vinyl monomer unit B to the total amount of monomer units in the copolymer $\alpha$ is preferably 56 mol% or more, more preferably 75 mol% or more, further preferably 82 mol% or more, further more preferably 85 mol% or more, further more preferably 86 mol% or more; and from the viewpoint of the dissolubility to neutral water, the ratio is preferably 97 mol% or less, more preferably 95 mol% or less, further preferably 94 mol% or less, further more preferably 93 mol% or less, further more preferably 89 mol% or less.

From a viewpoint of improving the toughness required of the soluble material for three-dimensional modeling, the weight average molecular weight of the copolymer $\alpha$ is preferably 3,000 or more, more preferably 3,500 or more, further preferably 4,000 or more; and from the viewpoint of the dissolubility to neutral water and a viewpoint of the modeling property by a 3D printer, the weight average molecular weight is preferably 70000 or less, more preferably 50000 or less, further preferably 30000 or less, further more preferably 20000 or less. In the present specification, the weight average molecular weight is measured by the method described in EXAMPLES.

From the viewpoint of the modeling property by a 3D printer, the glass transition temperature of the copolymer $\alpha$ is preferably 50°C or higher, more preferably 60°C or higher, further preferably 70°C or higher, further more preferably 80°C or higher; and from the same viewpoint, the glass transition temperature is preferably 250°C or lower, more preferably 220°C or lower. In the present specification, the glass transition temperature is measured by the method described in EXAMPLES.

The copolymer $\alpha$ may contain a monomer unit other than the vinyl monomer units A and B as far as the advantageous effects of the present embodiment are not damaged.

A method for producing a copolymer $\alpha$ is not particularly limited, and a conventionally known method for producing a copolymer can be applied. Examples of the method for producing a copolymer $\alpha$ include a method of radically polymerizing the vinyl monomers A and B with a polymerization initiator.

The content of the copolymer α in the soluble material for three-dimensional modeling can be adjusted as far as the advantageous effects of the present embodiment are not damaged; and from the viewpoints of the dissolubility to neutral water, the moisture absorption resistance, and the heat resistance, the content is preferably 30% by mass or more, more preferably 50% by mass or more, further preferably 60% by mass or more, further more preferably 70% by mass or more, further more preferably 80% by mass or more, further more preferably 90% by mass or more, further more preferably 95% by mass or more, further more preferably substantially 100% by mass, further more preferably 100% by mass. The phrase "substantially 100 mol%" means that a case is included in which a substance other than the copolymer α is inevitably mixed in the soluble material for three-dimensional modeling.

From the viewpoint of the modeling property by a 3D printer, the glass transition temperature of the soluble material for three-dimensional modeling is preferably 50°C or higher, more preferably 60°C or higher, further preferably 70°C or higher, further more preferably 80°C or higher; and from the same viewpoint, the glass transition temperature is preferably 250°C or lower, more preferably 220°C or lower.

The form of the soluble material for three-dimensional modeling is not particularly limited, and examples of the form include a pellet, powder, and a filament. From the viewpoint of the modeling property by a 3D printer, a filament is preferable.

From the viewpoint of the modeling property by a 3D printer and the viewpoint of improving the modeling accuracy of a three-dimensional object, the diameter of the filament is preferably 0.5 mm or more, more preferably 1.0 mm or more; and from the same viewpoints, the diameter is preferably 3.0 mm or less, more preferably 2.0 mm or less, further preferably 1.8 mm or less. From the viewpoint of enhancing the toughness, preparation of the filament is preferably performed by a drawing process. From the viewpoint of improving the toughness while maintaining the water solubility, the draw ratio in the drawing process is preferably 1.5 times or more, more preferably 2 times or more, further preferably 3 times or more, further more preferably 5 times or more; and from the same viewpoint, the draw ratio is preferably 200 times or less, more preferably 150 times or less, further preferably 100 times or less, further more preferably 50 times or less. The drawing temperature in the drawing process is preferably in a temperature range from 20°C lower than the glass transition temperature of the soluble material for three-dimensional modeling to 110°C higher than the glass transition temperature. From the viewpoint of improving the toughness and the viewpoint of the thermal stability, the lower limit of the drawing temperature is more preferably 10°C lower than the glass transition temperature, further preferably the same as the glass transition temperature. From the same viewpoints, the upper limit of the drawing temperature is more preferably 110°C higher than the glass transition temperature, further preferably 100°C higher than the glass transition temperature, further preferably 90°C higher than the glass transition temperature. The drawing may be performed by discharging a resin from an extruder while the resin is air-cooled or heated by hot air or a laser. The drawing may be performed by one stage or multiple stages to attain a prescribed draw ratio and a prescribed filament diameter.

The soluble material for three-dimensional modeling may contain a polymer other than the copolymer α in order to be heightened in physical properties, as far as the advantageous effects of the present embodiment are not damaged. Examples of the polymer include water-soluble polymers such as polyvinyl alcohol, polyethylene glycol, poly(ethylene glycol/propylene glycol), carboxymethylcellulose, and starch; hydrophobic polymers such as polymethyl methacrylate; elastomers such as polyetherester, polyetheresteramide, and polyurethane that are each composed of a hard segment and a soft segment, and thermoplastic elastomers that each contain a block copolymer made from an ionic monomer or a water-soluble nonionic monomer, and a hydrophobic monomer, or that each contain styrene-butadiene, alkyl methacrylate (having 1 to 18 carbon atoms)-alkyl acrylate (having 1 to 18 carbon atoms), or the like; graft polymers such as a graft polymer obtained by grafting hydrophobic rubber with a polymer such as polyacrylic acid or N,N-dimethylacrylamide, and a graft polymer obtained by grafting a silicone with polyoxazoline or N,N-dimethylacrylamide; copolymers each obtained by copolymerizing ethylene or an alkyl acrylate (having 1 to 18 carbon atoms) with a monomer having a carboxyl group, such as acrylic acid or methacrylic acid, with a monomer having an epoxy group, such as glycidyl methacrylate, or with a monomer having an amide group, such as N,N-dimethylacrylamide; and impact modifiers such as acrylic rubber and natural rubber latex.

When the soluble material for three-dimensional modeling contains a polymer other than the copolymer α, the soluble material for three-dimensional modeling can contain a compatibilizer from the viewpoint of heightening the affinity and the compatibility between the polymer and the copolymer α to improve the performance of the soluble material for three-dimensional modeling and improve the toughness of the filament made of the soluble material for three-dimensional modeling. Examples of the compatibilizer include (i) copolymers each made from a monomer having a glycidyl group, an isocyanate group, an epoxy group, or an oxazoline group, and/or a monomer having an acid anhydride structure, such as maleic anhydride, and, e.g., an alkyl acrylate or methacrylate, ethylene, propylene or vinyl acetate; (ii) block copolymers each made from two or more polymers selected from the following: polyester, polyamide, and polymers/copolymers each made from one or more selected from acrylic acid, methacrylic acid, alkyl acrylate or methacrylate, acrylamide, N,N-dimethylacrylamide, ethylene, propylene, butadiene, isopropylene, vinyl acetate, ethylene glycol, and propylene glycol; (iii) graft copolymers each made from two or more polymers selected from the following: polyester, polyamide, and polymers/copolymers each made from one or more selected from acrylic acid, methacrylic acid, alkyl acrylate or methacrylate, acrylamide, N,N-dimethylacrylamide, ethylene, propylene, butadiene, isopropylene, vinyl acetate, ethylene glycol, and propylene glycol; and (iv) surfactants.

The soluble material for three-dimensional modeling may contain a component different from the above-mentioned components as far as the advantageous effects of the present embodiment are not damaged. Examples of the different component include plasticizers such as a polyalkylene glycol diester of benzoic acid; and fillers such as calcium carbonate, magnesium carbonate, glass spheres, graphite, carbon black, carbon fiber, glass fiber, talc, wollastonite, mica, alumina, silica, kaolin, whisker, and silicon carbide.

<Method for manufacturing three-dimensional object>

A method for manufacturing a three-dimensional object according to the present embodiment is a method for manufacturing a three-dimensional object with an FDM system, the method including: a step of obtaining a precursor of a three-dimensional object that contains the three-dimensional object and a support material; and a support material removing step of bringing the precursor of the three-dimensional object into contact with neutral water to remove the support material, in which a material of the support material is the soluble material for three-dimensional modeling. According to the method for manufacturing a three-dimensional object, it is possible to restrain the support material from being foamed and thus restrain the three-dimensional object from being lowered in modeling accuracy, even when the support material is exposed to a high humidity and then used for manufacturing of the three-dimensional object with an FDM system of using, as a modeling material, a high heat resistance material such as an engineering plastic or a super engineering plastic, and it is possible to remove the support material quickly from the precursor of the three-dimensional object without using a strong alkaline aqueous solution. The reason why the method for manufacturing a three-dimensional object exhibits such advantageous effects is unclear, but is presumably the same as the reason why the soluble material for three-dimensional modeling exhibits the above-mentioned advantageous effects.

[Step of obtaining precursor of three-dimensional object that contains three-dimensional object and support material]

As the step of obtaining a precursor of a three-dimensional object that contains the three-dimensional object and a support material, a step of obtaining a precursor of a three-dimensional object that contains the three-dimensional object and a support material in a known method for manufacturing a three-dimensional object with a 3D printer of a FDM system can be used, except that the material of the support material is the soluble material for three-dimensional modeling.

A modeling material that is the material of the three-dimensional object can be used without any particular limitation as long as the modeling material is a resin that is used as the modeling material in the conventional method for manufacturing a three-dimensional object with an FDM system. Examples of the modeling material include thermoplastic resins such as an ABS resin, a polylactic acid resin, a polycarbonate resin, 12-nylon, 6,6-nylon, 6-nylon, a polyphenylsulfone resin, polyether ether ketone, and polyetherimide. Among these resins, the modeling material is more preferably a polycarbonate resin, 12-nylon, 6,6-nylon, 6-nylon, a polyphenylsulfone resin, polyether ether ketone, or polyetherimide.

[Support material removing step of bringing precursor of three-dimensional object into contact with neutral water to remove support material]

In the support material removing step, the precursor of the three-dimensional object is brought into contact with neutral water to remove the support material. The method of bringing the precursor of the three-dimensional object into contact with neutral water is preferably a method of soaking the precursor of the three-dimensional object in neutral water, from a viewpoint of the costs and a viewpoint of the ease of work. From a viewpoint of improving the removability of the support material, the precursor of the three-dimensional object can be irradiated with ultrasonic waves while being soaked in neutral water to promote the dissolution of the support material.

[Neutral water]

Examples of the neutral water include ion exchanged water, pure water, tap water, and industrial water. From an economic viewpoint, ion exchanged water and tap water are preferable. The neutral water may contain a water-soluble organic solvent as far as the solvent does not damage the three-dimensional object modeled. Examples of the water-soluble organic solvent include lower alcohols such as methanol, ethanol, and 2-propanol; glycol ethers such as propylene glycol monomethyl ether, ethylene glycol monoethyl ether, ethylene glycol mono-tertiary-butyl ether, and diethylene glycol monobutyl ether; and ketones such as acetone and methyl ethyl ketone. When the neutral water contains the water-soluble organic solvent, the content of the water-soluble organic solvent in the neutral water is preferably 0.1% by mass or more, more preferably 0.5% by mass or more, further preferably 1% by mass or more, further preferably 3% by mass or more, and is preferably 50% by mass or less, more preferably 40% by mass or less, further preferably 30% by mass or less, further more preferably 20% by mass or less, from the viewpoints of the dissolubility and the damage to the three-dimensional object modeled.

From a viewpoint of the dissolubility of the support material, the amount of the neutral water used is preferably 10 mass times or more, more preferably 20 mass times or more the support material; and from the economic viewpoint, the amount is preferably 10000 mass times or less, more preferably 5000 mass times or less, further preferably 1000 mass times or less, further more preferably 100 mass times or less the support material.

From the viewpoint of the removability of the support material, the period over which the soluble material for three-dimensional modeling is in contact with the neutral water is preferably 5 minutes or longer; and from a viewpoint of a decrease of the damage which the three-dimensional object suffers through the contact of the object with the neutral water over a long period and the economic viewpoint, the period is preferably 180 minutes or shorter, more preferably 120 minutes or shorter, further preferably 90 minutes or shorter. From the viewpoint of the removability of the support material, the viewpoint of a decrease of the damage which the three-dimensional object suffers, and the economic viewpoint, the washing temperature, which depends on the type of the modeling material, is preferably 15°C or higher, more preferably 25°C or higher, further preferably 30°C or higher, further more preferably 40°C or higher; and from the same viewpoints, the washing temperature is preferably 85°C or lower, more preferably 70°C or lower.

<Support material>

A support material according to the present embodiment is a support material for supporting a three-dimensional object when the three-dimensional object is manufactured by a 3D printer of an FDM system, in which the support material contains the copolymer $\alpha$. The support material is restrained from being foamed and is thus capable of restraining the three-dimensional object from being lowered in modeling accuracy, even when the support material is exposed to a high humidity and then used for manufacturing of the three-dimensional object with an FDM system of using, as a modeling material, a high heat resistance material such as an engineering plastic or a super engineering plastic, and the support material is removable quickly from a precursor of the three-dimensional object without using a strong alkaline aqueous solution. The reason why the support material exhibits such advantageous effects is unclear, but is presumably the same as the reason why the soluble material for three-dimensional modeling exhibits the above-mentioned advantageous effects.

EXAMPLES

<Preparation and the like of copolymer>

[Example 1: copolymer 1]

Into a 300-mL separable flask equipped with a thermometer, a condenser, and a stirring blade were charged 12.89 g of sodium p-styrenesulfonate (manufactured by Wako Pure Chemical Industries, Ltd.), 49.61 g of methyl methacrylate (manufactured by Wako Pure Chemical Industries, Ltd.), and 368.73 g of acetone/ion exchanged water (50/50% by mass), and the mixed solution was stirred for dissolution. After the dissolution, the solution was bubbled with nitrogen introduced through a nitrogen introduction tube, and thus a 30-minute nitrogen purge was performed. Thereafter, the temperature of the solution was increased to 70°C under a flow of nitrogen, and at a time when the liquid temperature reached 70°C, to the solution was added an initiator solution obtained by dissolving 0.39 g of V-601 (manufactured by Wako Pure Chemical Industries, Ltd.) in 10 g of acetone/ion exchanged water (50/50% by mass), and the mixed solution was stirred at 70°C for 3 hours. Then, to the reaction solution was added a solution obtained by dissolving 0.13 g of a polymerization initiator (V-601 manufactured by Wako Pure Chemical Industries, Ltd.) in 4.0 g of acetone/ion exchanged water (50/50% by mass), and the reaction solution was stirred at 70°C for 3 hours. Then, the reaction solution was cooled to 25°C, and the solvent was removed by an evaporator and a vacuum dryer to give a white solid copolymer 1. Table 1 shows the composition and the weight average molecular weight of the copolymer 1.

[Example 2: copolymer 2]

A copolymer was synthesized by the same method as in Example 1 except for using 4.33 g of sodium p-styrenesulfonate, 37.67 g of methyl methacrylate, 259.62 g of acetone/ion exchanged water (50/50% by mass), and an initiator solution obtained by dissolving 0.29 g of a polymerization initiator (V-601 manufactured by Wako Pure Chemical Industries, Ltd.) in 10 g of acetone/ion exchanged water, and except for adding no further initiator. The reaction was performed at 70°C for 6 hours, and then the solvent was removed by an evaporator and a vacuum drier to give a white solid copolymer 2. Table 1 shows the composition and the weight average molecular weight of the copolymer 2.

[Example 3: copolymer 3]

A copolymer 3 was synthesized by the same method as in Example 2 except for using 6.00 g of sodium p-styrenesulfonate, 34.00 g of methyl methacrylate, 258 g of acetone/ion exchanged water (50/50% by mass), and an initiator solution obtained by dissolving 0.25 g of a polymerization initiator (V-601 manufactured by Wako Pure Chemical Industries, Ltd.) in 10 g of acetone/ion exchanged water. Table 1 shows the composition and the weight average molecular weight of the copolymer 3 obtained.

[Example 4: copolymer 4]

Into a 300-mL separable flask equipped with a thermometer, a condenser, and a stirring blade were charged 7.33 g of sodium p-styrenesulfonate, 29.77 g of styrene (manufactured by Wako Pure Chemical Industries, Ltd.), and 212.50 g of N,N-dimethylformamide (manufactured by Wako Pure Chemical Industries, Ltd.), and the mixed solution was stirred for dissolution. After the dissolution, the solution was bubbled with nitrogen introduced through a nitrogen introduction tube, and thus a 30-minute nitrogen purge was performed. Thereafter, the temperature of the solution was increased to 70°C under a flow of nitrogen, and at a time when the liquid temperature reached 70°C, to the solution was added an initiator solution obtained by dissolving 0.67 g of a polymerization initiator (V-601 manufactured by Wako Pure Chemical Industries, Ltd.) in 5 g of N, N-dimethylformamide, and the mixed solution was stirred at 70°C for 5 hours and 50 minutes. Then, to the reaction solution was added an initiator solution obtained by dissolving 0.46 g of a polymerization initiator (V-601 manufactured by Wako Pure Chemical Industries, Ltd.) in 5.0 g of N,N-dimethylformamide, and the reaction solution was stirred at 70°C for 8 hours. Further, to the reaction solution was added an initiator solution obtained by dissolving 0.26 g of a polymerization initiator (V-601 manufactured by Wako Pure Chemical Industries, Ltd.) in 4.0 g of N,N-dimethylformamide, and the reaction solution was stirred at 70°C for 8 hours. Then, the reaction solution obtained was added to acetone to precipitate a copolymer, which was washed with acetone and then dried by a vacuum dryer to give a white solid copolymer 4. Table 1 shows the composition and the weight average molecular weight of the copolymer 4 obtained.

[Comparative Example 1]

Commercially available sodium polystyrene sulfonate (manufactured by Alfa Aesar) was used. The weight average molecular weight indicated in Table 1 is a value indicated in a catalog of Alfa Aesar, and the glass transition temperature is a value indicated in the document Dhamodaran Arunbabu, Zomuan Sanga, Kamal Mohamed Seenimeera, and Tushar Jana, Polymer International, 58, 88-96 (2009).

[Comparative Example 2]

Commercially available polymethyl methacrylate (manufactured by Wako Pure Chemical Industries, Ltd.) was used.

[Comparative Example 3: copolymer 5]

Into a 1-L stainless-steel separable flask (with a K-tube, a stirrer, and a nitrogen introduction tube) were charged 60.3 g of dimethyl 2,6-naphthalenedicarboxylate, 45.4 g of ethylene glycol, 24.9 g of dimethyl sodium 5-sulfoisophthalate, 14 mg of titanium tetrabutoxide, and 104 mg of sodium acetate, and the mixed solution was subjected to a transesterification reaction at a normal pressure under a nitrogen atmosphere, in a mantle heater at an external temperature of 240°C for 7 hours. Subsequently, the external temperature was increased to 280°C with the mantle heater, while the pressure was simultaneously reduced to 0.9 kPa and the solution was stirred, to perform polycondensation for 2.25 hours and thus give a slightly yellow transparent (room temperature) copolymer 5 (polyester compound). Table 1 shows the composition and the weight average molecular weight of the copolymer 5 obtained.

[Example 5: copolymer 6]

Into a 300-mL separable flask equipped with a thermometer, a condenser, and a stirring blade were charged 7.33 g of sodium p-styrenesulfonate, 29.77 g of N-phenylmaleimide (manufactured by Wako Pure Chemical Industries, Ltd.), and 212.50 g of N,N-dimethylformamide (manufactured by Wako Pure Chemical Industries, Ltd.), and the mixed solution was stirred for dissolution. After the dissolution, the solution was bubbled with nitrogen introduced through a nitrogen introduction tube, and thus a 30-minute nitrogen purge was performed. Thereafter, the temperature of the solution was increased to 85°C under a flow of nitrogen, and at a time when the liquid temperature reached 85°C, to the solution was added an initiator solution obtained by dissolving 0.24 g of a polymerization initiator (V-601 manufactured by Wako Pure Chemical Industries, Ltd.) in 10 g of N,N-dimethylformamide, and the mixed solution was stirred at 85°C for 6 hours. The reaction solution obtained was added to acetone to precipitate a copolymer, which was washed with acetone and then dried by a vacuum dryer to give a pale pink solid copolymer 6. Table 2 shows the composition and the weight average molecular weight of the copolymer 6 obtained.

[Example 6: copolymer 7]

Into a 300-mL separable flask equipped with a thermometer, a condenser, and a stirring blade were charged 7.98 g of sodium p-styrenesulfonate, 20.96 g of N-phenylmaleimide (manufactured by Wako Pure Chemical Industries, Ltd.), 8.55 g of styrene (manufactured by Wako Pure Chemical Industries, Ltd.), and 212.50 g of N,N-dimethylformamide (manufactured by Wako Pure Chemical Industries, Ltd.), and the mixed solution was stirred for dissolution. After the dissolution, the solution was bubbled with nitrogen introduced through a nitrogen introduction tube, and thus a 30-minute nitrogen purge was performed. Thereafter, the temperature of the solution was increased to 85°C under a flow of nitrogen, and at a time when the liquid temperature reached 85°C, to the solution was added an initiator solution obtained by dissolving 0.28 g of a polymerization initiator (V-601 manufactured by Wako Pure Chemical Industries, Ltd.) in 10 g of N,N-dimethylformamide, and the mixed solution was stirred at 85°C for 6 hours. The reaction solution obtained was added to ethanol to precipitate a copolymer, which was washed with ethanol and then dried by a vacuum dryer to give a pale pink solid copolymer 7. Table 2 shows the composition and the weight average molecular weight of the copolymer 7 obtained.

[Example 7: copolymer 8]

Into a 300-mL separable flask equipped with a thermometer, a condenser, a stirring blade, and a dropping funnel were charged 0.033 g of sodium p-styrenesulfonate, 3.75 g of acrylonitrile (manufactured by Wako Pure Chemical Industries, Ltd.), and 16.24 g of N,N-dimethylformamide (manufactured by Wako Pure Chemical Industries, Ltd.), and the mixed solution was stirred for dissolution. Further, into the dropping funnel were charged 7.73 g of sodium styrenesulfonate, 26.01 g of acrylonitrile, 0.62 g of a polymerization initiator (V-601), and 192.49 g of N,N-dimethylformamide, and the substances were dissolved to give a solution. The solutions in the separable flask and the dropping funnel were each bubbled with nitrogen introduced through a nitrogen introduction tube, and thus a 30-minute nitrogen purge was performed. Thereafter, the temperature of the solution in the separable flask was increased to 85°C under a flow of nitrogen, and at a time when the liquid temperature reached 85°C, to the solution was added an initiator solution obtained by dissolving 0.071 g of a polymerization initiator (V-601 manufactured by Wako Pure Chemical Industries, Ltd.) in 5 g of N,N-dimethylformamide, and the mixed solution was stirred at 85°C for 10 minutes. Thereafter, the solution in the dropping funnel was dropped into the separable flask over 3 hours at a constant speed. After the drop, the solution in the flask further underwent a reaction at 85°C for 3 hours. The reaction solution obtained was added to 2-propanol to precipitate a copolymer, which was washed with ethanol and then dried by a vacuum dryer to give a white solid copolymer 8. Table 2 shows the composition and the weight average molecular weight of the copolymer 8 obtained.

[Example 8: copolymer 9]

Into a 300-mL separable flask equipped with a thermometer, a condenser, and a stirring blade were charged 7.73 g of sodium p-styrenesulfonate, 21.28 g of N-phenylmaleimide (manufactured by Wako Pure Chemical Industries, Ltd.), 8.51 g of methyl methacrylate (manufactured by Wako Pure Chemical Industries, Ltd.), and 211.84 g of N,N-dimethylformamide (manufactured by Wako Pure Chemical Industries, Ltd.), and the mixed solution was stirred for dissolution. After the dissolution, the solution was bubbled with nitrogen introduced through a nitrogen introduction tube, and thus a 30-minute nitrogen purge was performed. Thereafter, the temperature of the solution was increased to 85°C under a flow of nitrogen, and at a time when the liquid temperature reached 85°C, to the solution was added an initiator solution obtained by dissolving 0.29 g of a polymerization initiator (V-601 manufactured by Wako Pure Chemical Industries, Ltd.) in 10 g of N,N-dimethylformamide, and the mixed solution was stirred at 85°C for 6 hours. The reaction solution obtained was added to acetone to precipitate a copolymer, which was washed with acetone and then dried by a vacuum dryer to give a pale pink solid copolymer 9. Table 2 shows the composition and the weight average molecular weight of the copolymer 9 obtained.

[Example 9: copolymer 10]

Into a 300-mL separable flask equipped with a thermometer, a condenser, and a stirring blade were charged 7.73 g of sodium p-styrenesulfonate, 29.77 g of isobornyl methacrylate (manufactured by Wako Pure Chemical Industries, Ltd.), and 212.50 g of N,N-dimethylformamide (manufactured by Wako Pure Chemical Industries, Ltd.), and the mixed solution was stirred for dissolution. After the dissolution, the solution was bubbled with nitrogen introduced through a nitrogen introduction tube, and thus a 30-minute nitrogen purge was performed. Thereafter, the temperature of the solution was increased to 80°C under a flow of nitrogen, and at a time when the liquid temperature reached 80°C, to the solution was added an initiator solution obtained by dissolving 0.20 g of a polymerization initiator (V-601 manufactured by Wako Pure Chemical Industries, Ltd.) in 10 g of N,N-dimethylformamide, and the mixed solution was stirred at 80°C for 6 hours. The reaction solution obtained was added to acetone to precipitate a copolymer, which was washed with acetone and then dried by a vacuum dryer to give a pale pink solid copolymer 10. Table 2 shows the composition and the weight average molecular weight of the copolymer 10 obtained.

<Analysis and evaluation>

[Copolymer composition]

The copolymer composition was obtained by proton NMR measurement with NMR MR400 manufactured by Agilent Technologies. As regards the copolymer 4, the peaks derived from aromatic rings of a sodium p-styrenesulfonate unit and a styrene unit are overlapped, so that the residual monomer amount of each unit at the completion of the polymerization was obtained by NMR to obtain the composition ratio of the monomers polymerized.

[Weight average molecular weight]

A calibration curve of reference polystyrene was created by gel permeation chromatography (GPC), and the weight average molecular weight (Mw) was obtained under the following measurement conditions 1. As regards the copolymer 2 (insoluble in N,N-dimethylformamide serving as a GPC solvent) and polymethyl methacrylate in Comparative Example 2, a calibration curve was created from polymethyl methacrylate under the conditions 2, and the weight average molecular weight (Mw) was obtained.

[Conditions 1]

- Apparatus: HLC-8320 GPC (manufactured by Tosoh Corporation, detector integrated type)
- Column: $\alpha$-M $\times$ 2 columns (manufactured by Tosoh Corporation, 7.8 mml.D. $\times$ 30 cm)
- Eluent: 60 mmol/l phosphoric acid + 50 mmol/l brominated lithium dimethylformamide solution
- Flow: 1.0 ml/min
- Column temperature: 40°C
- Detector: RI detector
- Reference material: polystyrene

[Conditions 2]

- Measurement apparatus: HLC-8320 GPC (manufactured by Tosoh Corporation, detector integrated type)
- Column: TSK-Gel Super AWM-H (manufactured by Tosoh Corporation)
- Eluent: HFIP (1,1,1,3,3,3-Hexafluoro-2-propanol manufactured by Wako Pure Chemical Industries, Ltd.)/0.5 mM sodium trifluoroacetate
  Flow: 0.2 mL/min
- Column temperature: 40°C
- Detector: RI detector
- Reference material: polymethyl methacrylate (PMMA)

[Glass transition temperature]

Each of the copolymers was crushed (crushing time was 120 seconds) with a coffee mill (Mini Blender manufactured by OSAKA CHEMICAL Co., Ltd.) to prepare an evaluation sample. This powder was weighed and sealed in an aluminum pan. By using a DSC (DSC7020 manufactured by Seiko Instruments Inc.), the temperature of the aluminum pan with the powder was increased from 30°C to 250°C at 20°C/min, and the aluminum pan with the powder was then cooled to - 80°C at the same speed. The temperature of the aluminum pan with the powder was increased again to 250°C at 20°C/min to obtain a DSC curve. The glass transition temperature (°C) was obtained from the DSC curve.

[Moisture absorption rate]

A dried sample was put in a desiccator adjusted to 98 %RH and stored for 24 hours. The moisture absorption rate was obtained from a change in weight of the sample between before and after the storage.

$$\texttt{Moisture absorption rate (\%) = (weight after storage}$$
$$\texttt{- weight before storage)/weight before storage} \times \texttt{100}$$

[Dissolution rate]

[Dissolution rate to water]

The copolymer of each of the examples and the like was crushed (crushing time was 120 seconds) with a coffee mill (Mini Blender manufactured by OSAKA CHEMICAL Co., Ltd.) to prepare an evaluation sample. The evaluation sample powder in an amount of 0.25 g was dispersed in 5 g of 70°C ion exchanged water in a 10-mL screw cap tube, left to stand still for 5 minutes, then softly shaken for redispersion of the powder, and further left to stand still at 70°C for 5 minutes. The polymer that remained undissolved was filtrated under reduced pressure (paper filter No. 5C/70 mm manufactured by ADVANTEC) and dried. The dry mass of the undissolved polymer was measured and the dissolution rate was calculated using the following formula. Tables 1 and 2 show evaluation results.

$$\texttt{Dissolution rate (\%) = (mass of polymer before}$$
$$\texttt{dissolution - mass of undissolved polymer)/mass of polymer}$$
$$\texttt{before dissolution} \times \texttt{100}$$

[Dissolution rate to washing agent]

The dissolution rate to a washing agent was measured in the same manner as in the method of measuring the dissolution rate to water except that a 20% by mass solution of ethylene glycol monobenzyl ether was used in place of the ion exchanged water. Tables 1 and 2 show evaluation results.

[Evaluation of interaction]

The peak top of a carbonyl stretching peak (around 1700 $cm^{-1}$) derived from methyl methacrylate was measured by an infrared absorption spectrum. The measurement conditions are as follows. Table 3 shows evaluation results of the interaction.

    Apparatus: Fourier transform infrared spectrophotometer (FT-710 manufactured by HORIBA, Ltd.)
    Measurement method: attenuated total reflection Scanning speed: 5
    Cumulated number: 10
    Measurement range: 650 to 4000 $cm^{-1}$

In Tables 1 and 2 below, NaSS (mol%) means the proportion (mol%) of the sodium p-styrenesulfonate monomer unit in the total monomer units of the copolymer, MMA (mol%) means the proportion (mol%) of the methyl methacrylate monomer unit in the total monomer units of the copolymer, St (mol%) means the proportion (mol%) of the styrene monomer unit in the total monomer units of the copolymer, PMI (mol%) means the proportion (mol%) of the N-phenylmaleimide monomer unit in the total monomer units of the copolymer, AN (mol%) means the proportion (mol%) of the acrylonitrile monomer unit in the total monomer units of the copolymer, and IBMA (mol%) means the proportion (mol%) of the isobornyl methacrylate monomer unit in the total monomer units of the copolymer.

[Table 1]

| | Copolymer | Copolymer composition | | | Amount of vinyl monomer unit A (mmol/g) | Weight average molecular weight | Glass transition temperature (°C) | Dissolution Rate (%) | | Moisture absorption rate (%) |
|---|---|---|---|---|---|---|---|---|---|---|
| | | Composition of monomer units | | | | | | Water | Washing agent[4] | |
| | | NaSS (mol%) | MMA (mol%) | St (mol%) | | | | | | |
| Example 1 | Copolymer 1 | 14.6 | 85.4 | - | 1.26 | 295000 | 235 | 98 | - | 27 |
| Example 2 | Copolymer 2 | 7.9 | 92.1 | - | 0.73 | 172000 | 130 | 34 | 76 | 17 |
| Example 3 | Copolymer 3 | 13.3 | 86.7 | - | 1.16 | 296000 | 201 | 100 | - | 27 |
| Example 4 | Copolymer 4 | 13.0[1] | - | 87.0 | 1.11 | 23200 | 146 | 5 | 100 | 8 |
| Comparative Example 1 | Sodium polystyrene sulfonate | 100.0 | - | - | 4.85 | 70000[2] | 220[3] | 99 | - | 80[5] |
| Comparative Example 2 | Polymethyl methacrylate | - | 100.0 | - | 0.00 | 116000 | 102 | 0.6 | - | 1.2 |
| Comparative Example 3 | Copolymer 5 | - | - | - | 1.00 | 15000 | 102 | 72 | - | 7 |

1) Calculated from conversion rate at completion of polymerization
2) Value indicated in catalog of Alfa Aesar
3) Value indicated in document
4) Washing agent: 20% by mass solution of ethylene glycol monobenzyl ether
5) Liquefied by deliquescence

[Table 2]

| | Copolymer | Copolymer composition | | | | | | Amount of vinyl monomer unit A (mmol/g) | Weight average molecular weight | Glass transition temperature (°C) | Dissolution Rate (%) | | Moisture absorption rate (%) |
| | | Composition of monomer units | | | | | | | | | | | |
| | | NaSS (mol%) | PMI (mol%) | St (mol%) | MMA (mol%) | AN (mol%) | IBMA (mol%) | | | | Waler | Washing agent[1] | |
| Example 5 | Copolymer 6 | 47.0 | 53.0 | - | - | - | - | 2.50 | 36400 | 276 | 98 | - | 30 |
| Example 6 | Copolymer 7 | 15.0 | 50.0 | 35.0 | - | - | - | 0.98 | 78800 | 207 | 3 | 100 | 1.5 |
| Example 7 | Copolymer 8 | 9.8 | - | - | - | 90.2 | - | 1.40 | 35000 | 176 | 72 | - | 21 |
| Example 8 | Copolymer 9 | 8.5 | 50.8 | - | 30.7 | - | - | 1.20 | 61900 | 228 | 56 | - | 22 |
| Example 9 | Copolymer 10 | 23.0 | - | - | - | - | 77.0 | 1.04 | 46800 | 189 | 5.3 | 99 | 12 |
| 1) Washing agent: 20% by mass solution of ethylene glycol monobenzyl ether | | | | | | | | | | | | | |

[Table 3]

|  | Copolymer | Carbonyl stretching peak (cm$^{-1}$) | Glass transition temperature (°C) |
|---|---|---|---|
| Example 1 | Copolymer 1 | 1718.3 | 235 |
| Example 2 | Copolymer 2 | 1720.2 | 130 |
| Example 3 | Copolymer 3 | 1722.1 | 201 |
| Example 6 | Copolymer 7 | 1704.8 | 207 |

**Claims**

1. A soluble material for three-dimensional modeling that is used as a material of a support material for supporting a three-dimensional object when the three-dimensional object is manufactured by a 3D printer of a fused deposition modeling system,

   wherein the soluble material for three-dimensional modeling comprises a copolymer α having a vinyl monomer unit A that has a hydrophilic group, and having a vinyl monomer unit B that has a group interacting with the hydrophilic group and is other than the vinyl monomer unit A,
   the vinyl monomer unit A in the copolymer α has a content of the hydrophilic group of 0.3 to 3.0 mmol/g, and
   wherein the hydrophilic group is a sulfonate group and wherein the content of hydrophilic group is determined according to the method mentioned in the specification.

2. The soluble material for three-dimensional modeling according to claim 1,
   wherein the mole ratio between the hydrophilic group and the group interacting with the hydrophilic group (the hydrophilic group/the group interacting with the hydrophilic group) is 0.03 or more and 0.7 or less and wherein the mole ratio between the hydrophilic group and the group interacting with the hydrophilic group is determined according to the method mentioned in the specification.

3. The soluble material for three-dimensional modeling according to claim 1 or 2,
   wherein the content of the group interacting with the hydrophilic group in the copolymer α is 3.8 mmol/g or more and 9.4 mmol/g or less and wherein the the content of the group interacting with the hydrophilic group in the copolymer α is determined according to the method mentioned in the specification.

4. The soluble material for three-dimensional modeling according to any one of claims 1 to 3,
   wherein the glass transition temperature of the soluble material for three-dimensional modeling is 50°C or higher and 250°C or lower and wherein the glass transition temperature is determined according to the method mentioned in the specification.

5. The soluble material for three-dimensional modeling according to any one of claims 1 to 4,
   wherein the content of the copolymer α in the soluble material for three-dimensional modeling is 30% by mass or more.

6. The soluble material for three-dimensional modeling according to any one of claims 1 to 5,
   wherein the glass transition temperature of the copolymer α is 50°C or higher and 250°C or lower and wherein the glass transition temperature is determined according to the method mentioned in the specification.

7. The soluble material for three-dimensional modeling according to any one of claims 1 to 6,
   wherein the ratio of the amount of the vinyl monomer unit A to the total amount of monomer units in the copolymer α is 3 mol% or more and 55 mol% or less.

8. The soluble material for three-dimensional modeling according to any one of claims 1 to 7,
   wherein the content of the vinyl monomer unit A in the copolymer α is 0.3 mmol/g or more and 3.0 mmol/g or less and wherein the content of the vinyl monomer unit A is determined according to the method mentioned in the specification.

9. The soluble material for three-dimensional modeling according to any one of claims 1 to 8,

wherein the weight average molecular weight of the copolymer $\alpha$ is 3,000 or more and wherein the weight average molecular weight is determined according to the method mentioned in the specification.

10. The soluble material for three-dimensional modeling according to any one of claims 1 to 9, wherein a vinyl monomer A for deriving the vinyl monomer unit A contains at least one type selected from the group consisting of styrene sulfonate, vinyl sulfonate, a sulfonate group-introduced (meth)acrylic acid alkyl ester, and sulfonate group-introduced (meth)acrylamide.

11. The soluble material for three-dimensional modeling according to any one of claims 1 to 10, wherein the vinyl monomer unit B contains at least one type selected from the group consisting of a carbonyl group, an ether group, and an aromatic group.

12. The soluble material for three-dimensional modeling according to any one of claims 1 to 11, wherein a vinyl monomer B for deriving the vinyl monomer unit B is a (meth) acrylic acid alkyl ester and/or styrene.

13. A method for manufacturing a three-dimensional object by a fused deposition modeling system, the method comprising: a step of obtaining a precursor of a three-dimensional object that contains the three-dimensional object and a support material; and a support material removing step of bringing the precursor of the three-dimensional object into contact with neutral water to remove the support material, wherein a material of the support material is the soluble material for three-dimensional modeling according to any one of claims 1 to 12.

14. The method for manufacturing a three-dimensional object according to claim 13, comprising a support material removing step of soaking the precursor of the three-dimensional object in neutral water and dissolving the support material to remove the support material.

15. A support material for supporting a three-dimensional object when the three-dimensional object is manufactured by a 3D printer of a fused deposition modeling system,

wherein the support material comprises a copolymer $\alpha$ having a vinyl monomer unit A that has a hydrophilic group, and having a vinyl monomer unit B that has a group interacting with the hydrophilic group and is other than the vinyl monomer unit A,
the vinyl monomer unit A in the copolymer $\alpha$ has a content of the hydrophilic group of 0.3 to 3.0 mmol/g, wherein the hydrophilic group is a sulfonate group and wherein the content of hydrophilic group is determined according to the method mentioned in the specification.

**Patentansprüche**

1. Lösliches Material für dreidimensionale Modellierung, verwendbar als Material eines Stützmaterials zum Stützen eines dreidimensionalen Objekts bei der Fertigung des dreidimensionalen Objekts durch einen 3D-Drucker eines Fused Deposition Modeling-Systems,

wobei das lösliche Material für dreidimensionale Modellierung ein Copolymer $\alpha$ umfasst, das eine Vinylmonomereinheit A aufweist, die eine hydrophile Gruppe aufweist, und eine Vinylmonomereinheit B aufweist, die eine mit der hydrophilen Gruppe interagierende und von der Vinylmonomereinheit A unterschiedliche Gruppe aufweist,
die Vinylmonomereinheit A im Copolymer $\alpha$ einen Gehalt der hydrophilen Gruppe von 0,3 bis 3,0 mmol/g aufweist und
wobei die hydrophile Gruppe eine Sulfonatgruppe ist und wobei der Gehalt der hydrophilen Gruppe nach dem in der Patentschrift angegebenen Verfahren bestimmt wird.

2. Lösliches Material für dreidimensionale Modellierung gemäß Anspruch 1,
wobei das Molverhältnis zwischen der hydrophilen Gruppe und der mit der hydrophilen Gruppe interagierenden Gruppe (hydrophile Gruppe/mit der hydrophilen Gruppe interagierende Gruppe) 0,03 oder mehr und 0,7 oder weniger beträgt und wobei das Molverhältnis zwischen der hydrophilen Gruppe und der mit der hydrophilen Gruppe interagierenden Gruppe nach dem in der Patentschrift angegebenen Verfahren bestimmt wird.

**3.** Lösliches Material für dreidimensionale Modellierung gemäß Anspruch 1 oder 2, wobei der Gehalt der mit der hydrophilen Gruppe interagierenden Gruppe in dem Copolymer α 3,8 mmol/g oder mehr und 9,4 mmol/g oder weniger beträgt und wobei der Gehalt der mit der hydrophilen Gruppe interagierenden Gruppe im Copolymer α nach dem in der Patentschrift angegebenen Verfahren bestimmt wird.

**4.** Lösliches Material für dreidimensionale Modellierung gemäß einem der Ansprüche 1 bis 3, wobei die Glasübergangstemperatur des löslichen Materials für dreidimensionale Modellierung 50°C oder höher und 250°C oder niedriger ist und wobei die Glasübergangstemperatur nach dem in der Patentschrift angegebenen Verfahren bestimmt wird.

**5.** Lösliches Material für dreidimensionale Modellierung gemäß einem der Ansprüche 1 bis 4, wobei der Anteil des Copolymers α im löslichen Material für dreidimensionale Modellierung 30 Masse-% oder mehr beträgt.

**6.** Lösliches Material für dreidimensionale Modellierung gemäß einem der Ansprüche 1 bis 5, wobei die Glasübergangstemperatur des Copolymers α 50°C oder höher und 250°C oder niedriger ist und wobei die Glasübergangstemperatur nach dem in der Patentschrift angegebenen Verfahren bestimmt wird.

**7.** Lösliches Material für dreidimensionale Modellierung gemäß einem der Ansprüche 1 bis 6, wobei das Verhältnis der Menge an Vinylmonomereinheit A zur Gesamtmenge an Monomereinheiten im Copolymer α 3 mol-% oder mehr und 55 mol-% oder weniger beträgt.

**8.** Lösliches Material für dreidimensionale Modellierung gemäß einem der Ansprüche 1 bis 7, wobei der Gehalt der Vinylmonomereinheit A im Copolymer α 0,3 mmol/g oder mehr und 3,0 mmol/g oder weniger beträgt und wobei der Gehalt der Vinylmonomereinheit A nach dem in der Patentschrift angegebenen Verfahren bestimmt wird.

**9.** Lösliches Material für dreidimensionale Modellierung gemäß einem der Ansprüche 1 bis 8, wobei das gewichtsmittlere Molekulargewicht des Copolymers α 3.000 oder mehr beträgt und wobei das gewichtsmittlere Molekulargewicht nach dem in der Patentschrift angegebenen Verfahren bestimmt wird.

**10.** Lösliches Material für dreidimensionale Modellierung gemäß einem der Ansprüche 1 bis 9, wobei ein Vinylmonomer A, von dem die Vinylmonomereinheit A ableitbar ist, mindestens einen Typ, ausgewählt aus der Gruppe, bestehend aus Styrolsulfonat, Vinylsulfonat, einem (Meth)acrylsäurealkylester mit eingeführter Sulfonatgruppe und einem (Meth)acrylamid mit eingeführter Sulfonatgruppe, enthält.

**11.** Lösliches Material für dreidimensionale Modellierung gemäß einem der Ansprüche 1 bis 10, wobei die Vinylmonomereinheit B mindestens einen Typ, ausgewählt aus der Gruppe, bestehend aus einer Carbonylgruppe, einer Ethergruppe und einer aromatischen Gruppe, enthält.

**12.** Lösliches Material für dreidimensionale Modellierung gemäß einem der Ansprüche 1 bis 11, wobei ein Vinylmonomer B von dem die Vinylmonomereinheit B ableitbar ist, ein (Meth)Acrylsäurealkylester und/oder Styrol ist.

**13.** Verfahren zur Fertigung eines dreidimensionalen Objekts mittels eines Fused Deposition Modeling-Systems, wobei das Verfahren umfasst: einen Schritt des Erhaltens eines Vorläufers eines dreidimensionalen Objekts, der das dreidimensionale Objekt und ein Stützmaterial enthält; und einen Schritt der Abtragung von Stützmaterial, bei dem der Vorläufer des dreidimensionalen Objekts in Kontakt mit neutralem Wasser gebracht wird, so dass Stützmaterial abgetragen wird, wobei ein Material des Stützmaterials das lösliche Material für dreidimensionale Modellierung gemäß einem der Ansprüche 1 bis 12 ist.

**14.** Verfahren zur Fertigung eines dreidimensionalen Objekts gemäß Anspruch 13, umfassend einen Schritt des Abtragens von Stützmaterial, bei dem der Vorläufer des dreidimensionalen Objekts in neutrales Wasser getaucht und Stützmaterial gelöst wird, so dass Stützmaterial abgetragen wird.

**15.** Stützmaterial zum Stützen eines dreidimensionalen Objekts bei der Fertigung des dreidimensionalen Objekts durch einen 3D-Drucker eines Fused Deposition Modeling-Systems,

wobei das Stützmaterial ein Copolymer α umfasst, das eine Vinylmonomereinheit A aufweist, die eine hydrophile Gruppe aufweist, und eine Vinylmonomereinheit B aufweist, die eine mit der hydrophilen Gruppe interagierende und von der Vinylmonomereinheit A unterschiedliche Gruppe aufweist,

die Vinylmonomereinheit A im Copolymer α einen Gehalt der hydrophilen Gruppe von 0,3 bis 3,0 mmol/g aufweist,

wobei die hydrophile Gruppe eine Sulfonatgruppe ist und wobei der Gehalt der hydrophilen Gruppe nach dem in der Patentschrift angegebenen Verfahren bestimmt wird.

## Revendications

1. Matériau soluble pour la modélisation tridimensionnelle qui est utilisé en tant que matériau d'un matériau de support pour supporter un objet tridimensionnel lorsque l'objet tridimensionnel est fabriqué par une imprimante 3D d'un système de modélisation par dépôt de fil fondu,

   dans lequel le matériau soluble pour la modélisation tridimensionnelle comprend un copolymère α présentant une unité monomère vinylique A qui présente un groupe hydrophile, et présentant une unité monomère vinylique B qui présente un groupe interagissant avec le groupe hydrophile et qui est autre que l'unité monomère vinylique A,

   l'unité monomère vinylique A dans le copolymère α présente une teneur du groupe hydrophile de 0,3 à 3,0 mmole/g, et

   dans lequel le groupe hydrophile est un groupe sulfonate et dans lequel la teneur de groupe hydrophile est déterminée selon le procédé mentionné dans le fascicule.

2. Matériau soluble pour la modélisation tridimensionnelle selon la revendication 1,
   dans lequel le rapport molaire entre le groupe hydrophile et le groupe interagissant avec le groupe hydrophile (le groupe hydrophile/le groupe interagissant avec le groupe hydrophile) est de 0,03 ou plus et de 0,7 ou moins et dans lequel le rapport molaire entre le groupe hydrophile et le groupe interagissant avec le groupe hydrophile est déterminé selon le procédé mentionné dans le fascicule.

3. Matériau soluble pour la modélisation tridimensionnelle selon la revendication 1 ou 2,
   dans lequel la teneur du groupe interagissant avec le groupe hydrophile dans le copolymère αest de 3,8 mmole/g ou plus et de 9,4 mmole/g ou moins et dans lequel la teneur du groupe interagissant avec le groupe hydrophile dans le copolymère α est déterminée selon le procédé mentionné dans le fascicule.

4. Matériau soluble pour la modélisation tridimensionnelle selon l'une quelconque des revendications 1 à 3,
   dans lequel la température de transition vitreuse du matériau soluble pour la modélisation tridimensionnelle est de 50 ° C ou supérieure et de 250 ° C ou inférieure et dans lequel la température de transition vitreuse est déterminée selon le procédé mentionné dans le fascicule.

5. Matériau soluble pour la modélisation tridimensionnelle selon l'une quelconque des revendications 1 à 4,
   dans lequel la teneur du copolymère α dans le matériau soluble pour la modélisation tridimensionnelle est de 30 % en masse ou plus.

6. Matériau soluble pour la modélisation tridimensionnelle selon l'une quelconque des revendications 1 à 5,
   dans lequel la température de transition vitreuse du copolymère α est de 50 ° C ou supérieure et de 250 ° C ou inférieure et dans lequel la température de transition vitreuse est déterminée selon le procédé mentionné dans le fascicule.

7. Matériau soluble pour la modélisation tridimensionnelle selon l'une quelconque des revendications 1 à 6,
   dans lequel le rapport de la quantité de l'unité monomère vinylique A sur la quantité totale d'unités monomères dans le copolymère αest de 3 % en moles ou plus et de 55 % en moles ou moins.

8. Matériau soluble pour la modélisation tridimensionnelle selon l'une quelconque des revendications 1 à 7,
   dans lequel la teneur de l'unité monomère vinylique A dans le copolymère α est de 0,3 mmole/g ou plus et de 3,0 mmole/g ou moins et dans lequel la teneur de l'unité monomère vinylique A est déterminée selon le procédé mentionné dans le fascicule.

**9.** Matériau soluble pour la modélisation tridimensionnelle selon l'une quelconque des revendications 1 à 8, dans lequel le poids moléculaire moyen en poids du copolymère α est de 3 000 ou plus et dans lequel poids le moléculaire moyen en poids est déterminé selon le procédé mentionné dans le fascicule.

**10.** Matériau soluble pour la modélisation tridimensionnelle selon l'une quelconque des revendications 1 à 9, dans lequel un monomère vinylique A pour l'acquisition de l'unité monomère vinylique A contient au moins un type sélectionné dans le groupe consistant en sulfonate styrénique, sulfonate vinylique, ester alkylique d'acide (méth)acrylique introduit dans un groupe sulfonate et (méth)acrylamide introduit dans un groupe sulfonate.

**11.** Matériau soluble pour la modélisation tridimensionnelle selon l'une quelconque des revendications 1 à 10, dans lequel l'unité monomère vinylique B contient au moins un type sélectionné dans le groupe consistant en un groupe carbonyle, un groupe éther et un groupe aromatique.

**12.** Matériau soluble pour la modélisation tridimensionnelle selon l'une quelconque des revendications 1 à 11, dans lequel un monomère vinylique B pour l'acquisition de l'unité monomère B est un ester alkylique d'acide (méth)acrylique et/ou du styrène.

**13.** Procédé de fabrication d'un objet tridimensionnel par un système de modélisation par dépôt de fil fondu, le procédé comprenant : une étape d'obtention d'un précurseur d'un objet tridimensionnel qui contient l'objet tridimensionnel et un matériau de support; et une étape d'élimination du matériau de support consistant à mettre le précurseur de l'objet tridimensionnel en contact avec de l'eau neutre pour éliminer le matériau de support, dans lequel un matériau du matériau de support est le matériau soluble pour la modélisation tridimensionnelle selon l'une quelconque des revendications 1 à 12.

**14.** Procédé de fabrication d'un objet tridimensionnel selon la revendication 13, comprenant une étape d'élimination de matériau de support consistant à tremper le précurseur de l'objet tridimensionnel dans de l'eau neutre et à dissoudre le matériau de support pour éliminer le matériau de support.

**15.** Matériau de support destiné à supporter un objet tridimensionnel lorsque l'objet tridimensionnel est fabriqué par une imprimante 3D d'un système de modélisation par dépôt de fil fondu,

dans lequel le matériau de support comprend un copolymère α présentant une unité monomère vinylique A qui présente un groupe hydrophile, et présentant une unité monomère vinylique B qui présente un groupe interagissant avec le groupe hydrophile et qui est autre que l'unité monomère vinylique A,
l'unité monomère vinylique A dans le copolymère α présente une teneur du groupe hydrophile de 0,3 à 3,0 mmole/g,
dans lequel le groupe hydrophile est un groupe sulfonate et dans lequel la teneur de groupe hydrophile est déterminée selon le procédé mentionné dans le fascicule.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012509777 T
- JP 2002516346 T
- JP 2017030346 A
- US 2017240675 A1
- US 2017232684 A1

**Non-patent literature cited in the description**

- **DHAMODARAN ARUNBABU ; ZOMUAN SANGA ; KAMAL MOHAMED SEENIMEERA ; TUSHAR JANA.** *Polymer International,* 2009, vol. 58, 88-96